Europäisches Patentamt

European Patent Office

Office européen des brevets

(19)

(11) Publication number: **0 321 108**

**A2**

(12) # EUROPEAN PATENT APPLICATION

(21) Application number: **88311166.8**

(22) Date of filing: **25.11.88**

(51) Int. Cl.⁴: **G05B 19/18**

(30) Priority: **12.12.87 CS 9095/87**

(43) Date of publication of application:
**21.06.89 Bulletin 89/25**

(84) Designated Contracting States:
**DE FR GB IT SE**

(71) Applicant: **PRVNI BRNESNSKA STROJIRNA KONCERNOVY PODNIK**
**No. 7/9 Olomoucka**
**Brno(CS)**

(72) Inventor: **Taraba, Oldrich**
**No. 7 Na Klimentce**
**Praha 6(CS)**
Inventor: **Valenta, Jiri**
**No. 6/175 V luhu**
**Praha 4(CS)**
Inventor: **Hampl, Jan**
**No. 12/188 Pstrossova**
**Praha 1(CS)**

(74) Representative: **Godwin, Edgar James et al**
**MARKS & CLERK 57-60 Lincoln's Inn Fields**
**London, WC2A 3LS(GB)**

(54) **Adaptive control of the trajectory of a working process.**

(57) An acoustic emission is generated due to contact of the working tool with the workpiece and stochastic signals are picked up in the course of the working process. On the basis of characteristic features of the said signals the trajectory of the working tool is corrected in order to maintain required conditions of the working process. A dimension standard (6) is fixed on a base 4 on which the fastening device (3) is also fixed, to which dimension standard (6) a first pick-up device (71) of ultrasonic stochastic signals is connected, the output of which pick-up device (71) is connected to a first input of an analog evaluation unit (10). One or more further pick-up devices (5) of ultrasonic stochastic signals are provided on the fastening device (3), the outputs of which further pick-up devices (5) are connected to further inputs of the analog evaluation unit (10). The output of the analog evaluation unit (10) is connected by way of an analog digital processor (11) with the input of a computer system (12), a first output of which is connected to the input of the said control system (14) and a second output of which is connected to a control input of the analog evaluation unit (10).

## Adaptive control of the trajectory of a working process

The invention relates to a method for adaptive control of the trajectory of a working process in the course of working of a workpiece by a working tool and to an arrangement by means of which this method can be accomplished.

Various additional arrangements utilizing a number of principles facilitating the control of a working process are presently used in the course of machining. They include mostly some auxiliary means enabling control of the shape of some object, based on copying or on indications of the position of the worked object and of the tool or arrangements for measuring torques, the supply of power and the regulation of power of the driving motor of a shaft, of drives of individual mobile axles and the like, and furthermore for adjustment of the position of a working tool. Some methods also utilize for control of trajectories of a working tool acoustic emissions generated in the course of working.

In no case, however, do such methods and corresponding arrangements solve the problem of adaptive control of the working process, particularly on digitally controlled or CNC machine tools. In other words it is not possible to follow changes of directions of movements of machine tools, particularly of grinding tools and realize an adaptive control of a technological process with regard to a required geometric shape of a certain object and furthermore with regard to a predetermined course of working, endeavouring to secure the maintenance of surface conditions, strength and structural physical properties of the material of the workpiece.

The present invention provides a method for adaptive control of the trajectory of a working process, and a corresponding arrangement, utilizing for this purpose stochastic signals generated in the course of working.

According to this invention ultrasonic stochastic signals generated in the course of contact of the working tool with the workpiece are picked-up and the track of the working tool is corrected on the basis of characteristic features of the signals in order to maintain a required geometric shape of the workpiece and also in order to maintain requirements of the working process and of technological conditions of working.

The arrangement for execution of this method comprises (in addition to other elements) a positioning device connected with the working tool and connected also to a control system and furthermore a dimension etalon (standard) with pick-up means of ultrasonic stochastic signals, fixed to the base of a machine tool, where also a dressing device is fixed with its proper pick-up device. The outputs of the said pick-up devices are connected to individual inputs of a controlled analog evaluation unit. At least another pick-up device of ultrasonic stochastic signals is fixed on the fastening device, the outputs of which are connected to independent inputs of the controlled analog evaluation unit. The outputs of the evaluation unit are connected by way of an analog digital processor with the input of a computer system, which itself is connected to the control system of the machine tool. The computer system is simultaneously connected with the input of the controlled analog evaluation unit for signalization of extraordinary and breakdown conditions.

It is advantageous to fix on the base of the machine tool a dressing device, a testing example for testing of the quality of the working tool and also a transducer or transmitter, the input of which is by way of a generator connected with a computer system in order to measure and check the acoustic and electric transmission channel.

It is furthermore possible to connect to this computer system a superposed computer with an implemented system CAD/CAM.

An advantage of the method and arrangement according to this invention is that it enables automatic adaptive control of the working process in the course of machining, where the stipulated technological conditions of the working process and of the workpiece are taken into account. The arrangement enables also prior measuring of the dimensions of the working tool and adjustment of its shape by means of a dressing device and also by means of an independent transducer and generator to check the functioning and preparedness of the system. After checking (determination) of the dimensions of the working tool, the system is to determine with high accuracy the starting position of the workpiece situated and fixed on the machine tool. A high accuracy of measuring of the working tool is achieved, which is better than 1 $\mu$m and furthermore the achievement of the required accuracy of dimensions of the workpiece, including its physical properties as for instance strength and structure of surface layers of the material of the workpiece.

The arrangement preferably uses an ultrasonic stochastic signal, advantageously within the range of 40 to 200 kHz. Both the determination of dimensions of the working tool and also of the workpiece, the intermediate evaluation and the following of the working process and control of the course of the technological working process and of its control are based on this principle.

Information about the controlled process can be derived from characteristic features of the ultrasonic stochastic signal processed by a controlled analog evaluation unit, by an analog digital processor, and by a computer system in order to determine and maintain working conditions according to stipulated technological parameters. The intensity and character of the emitted ultrasonic signal determine the course and parameters of working and are utilized for its checking and for adaptive control of the working process according to stipulated parameters, to the effective utilization of the working tool, and to the achievement of the required quality of the workpiece (geometry, surface, structure of material, internal stress, and the like).

The method for adaptive control of the trajectory of the working process and the arrangement for its execution according to this invention will now be described in detail, by way of example only, with reference to the accompanying drawings, in which:

Figure 1 shows diagrammatically the interconnection of various elements of the arrangement; and

Figure 2 and 3 indicate a tool and workpiece in elevation in conjunction with a graph showing the practical significance of utilization of for instance the dependence of a change of the magnitude of the level of an ultrasonic stochastic signal on the magnitude of a layer of removed material.

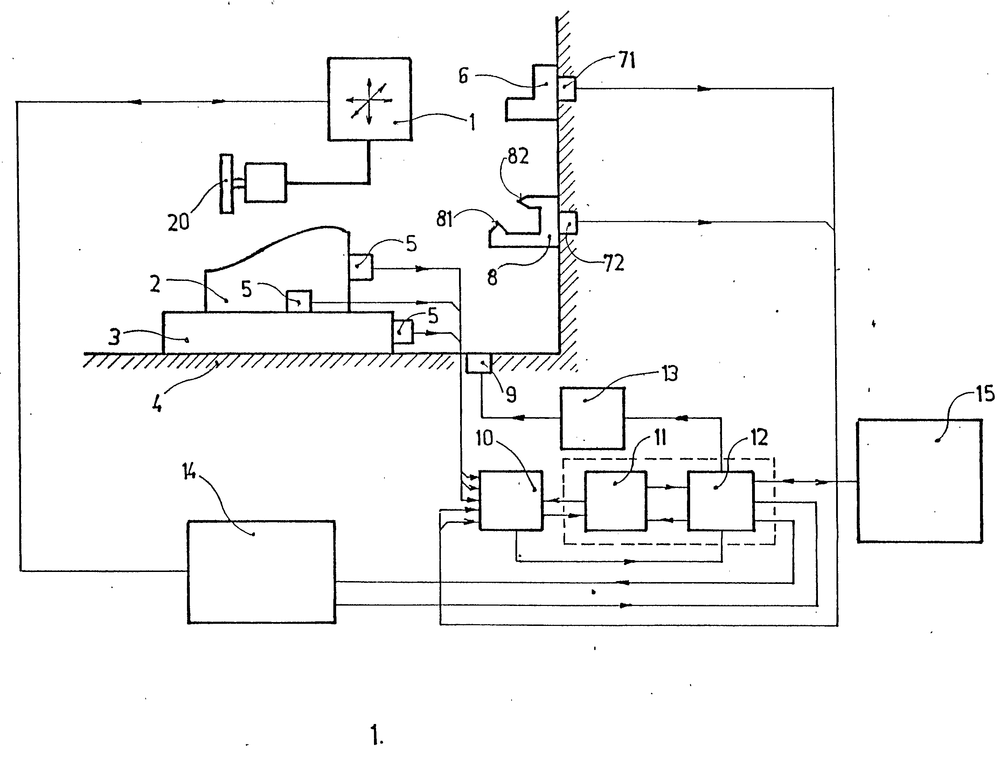

With reference to Figure 1, a fastening device 3 is situated on a base 4 of a machine tool, with a workpiece 2 fixed on the fastening device 3. Two pick-up devices 5 of ultrasonic stochastic signals are in this case fixed on the fastening device 3; another pick-up device 5 is situated directly on the workpiece 2. The pick-up devices utilize piezoelectric materials and are most sensitive within the frequency range of 40 kHz to 1 MHz. A preamplifier with impedance adjustment is part of the pick-up devices. The number of pick-up devices 5 depends on the nature of the applied technological process, on the size of the workpiece, on the tool, and on concrete working conditions. The outputs of the pick-up devices 5 are connected to inputs of a controlled analog evaluation device 10 whose output is by way of an analog digital processor 11 connected with a computer system 12 which is connected to a control system 14 of the machine tool. The controlled analog evaluation device 10 comprises for instance an amplifier, the gain of which is controlled by the analog digitial processor 11. Several parallel units can be provided behind the controlled amplifier which evaluates analogically individual parameters of ultrasonic stochastic signals, particularly the mean, the top, the effective value, the shape factor of the signal, and the like. These data are furthermore processed and evaluated by the analog digital process 11. The analog digital processor 11 controls the selection of the transmission channel of the analog evaluation unit 10, and furthermore process the obtained analog characteristic values from the analog evaluation unit 10 in software fashion. On the basis of their evaluation the data are transmitted to the superposed computer 12 or are already directly compared in the unit by the analog digital processor 11 with parameters of the technological working process and, on the basis of the result, the computer system 12 controls the control system 14 of the machine tool according to actual and stipulated values of the technological process.

The computer system 12 is simultaneously connected to the output of the controlled analog evaluation unit 10 in order to directly indicate breakdown conditions. A positioning device 1 connected with the working tool 20 is also connected to the control system 14. A dressing device 8 of the working tool with a pick-up device 72 of ultrasonic stochastic signals is furthermore also connected to the base 4 of the machine tool, the output of which pick-up device 72 is connected to the input of the analog evaluation unit 10, and a dimension etalon or standard 6 with a pick-up device 71 of ultrasonic stochastic signals is also equally connected by its output to the input of the analog evaluation unit 10 for further processing. The gain of the controlled analog evaluation unit 10 is adjusted according to technological condition of working and according to actual conditions of the working process by the computer system 12. Another input of the controlled analog evaluation unit 10 is a signal from the pick-up device 71 fixed to the dimension standard 6 which is situated at an exactly defined place. The dimension standard 6 is of very hard material, which is not subject to wear regarding its dimensions due to contact with the working tool 20. The wear of this dimension standard 6 in the course of prolonged contact with the working tool 20 is negligible and in case of a very prolonged process of measuring a very accurate statistic correction can be provided. The wear (change of dimensions - correction) of the working tool 20 can be very simply determined from known absolute dimensions of the standard 6 and of the positioning device 1 of the working tool 20 at the moment of contact. Contact is established solely in order to determine the dimensions of the working tool 20.

As the process of measuring and working is controlled by the computer system 12, the time sequence within which a certain signal from the pick-up devices 5 can occur is by the program exactly determined so that breakdown conditions are prevented. From this it follows that the computer system 12 both controls the picking-up of ultrasonic stochastic signals from the pick-up devices 5,71, and 72, and also controls a generator 13 which feeds a transducer 9, by means of which it is possible to determine the preparedness and conditions of the working system. The transducer 9 controls prior to starting the working on the basis of the generated ultrasonic stochastic signals the fixing of pick-up devices 71 and 72 and of further pick-up devices 5 and checks the correct functioning of the acoustic and electric transmission channels.

It is possible for evaluation of the course of the technological process according to the kind of workpiece 2, of the working tool 20 and of the course of the process to utilize also signals from a number of pick-up devices 5, whereby the methods of processing the said signals can be controlled by programs, that is a summation, differential, or the like signal can be picked-up, increasing thus the sensitivity against disturbing influences. According to stipulated technological parameters of the process, it is possible to adjust by the computer system 12 (prior to and in the course of working) the parameters of the controlled analog evaluation unit 10 so that the digital signal has the required dynamic and corresponds to the stipulated technological process. The computer system 12 enables one also to transmit and to receive information directly from the control system 14 of the machine tool, which thereafter controls the positioning device 1 with the working tool 20.

Prior to starting the technological process after measuring the dimensions of the working tool 20, the parameters of the coordinate system of the workpiece can be determined by the working tool 20 in relation to the coordinate system of the positioning device 1 with the working tool 20 of the machine tool, and these values are passed over to the computer system 12 or 15 by way of the control system 14 of the machine tool, where it is already possible to evaluate differences and perform the necessary transformations of the coordinate system of the machine tool and of the workpiece and to secure a correct generation of trajectories of the working tool 20 according to the mathematic model of the workpiece and of the stipulated technological working process.

The checking of the quality of the working tool 20 is ascertained either on a material testing sample situated on a defined place of the clamping part of the machine tool or on a defined place of the workpiece. The evaluation of the working properties (blunting or sealing of a grinding tool) is generally performed by measuring the time in the course of which this tool removes from the testing sample a certain amount of material, whereby the removal of material is controlled by acoustic emission. If the measured time is longer than the allowed time limit is comparison with the stipulated value or with the starting (reference) measurement, the system has to call for dressing of a grinding tool or for a change of the working tool.

It is possible to connect to the computer system 12 a superposed computer 15 with an implemented system CAD/CAM enabling one to provide a mathematic model of the workpiece and its transformation.

Part of the method according to this invention is also the control and the checking of the shape of the working tool 20, particularly of a grinding disk: the control system transfers the grinding disk to a certain place where a dressing and shaping device 8 with diamond dressing extensions 81 and 82 is provided; based on the present shape of the grinding tool 20 and the ascertained starting dimensions thereof, dressing of the tool 20 is performed. For this urpose dressing extensions 81 and 82 are suitable. The trajectories of dressing extensions or of the grinding tool can be controlled in the course of dressing. The course of shaping is followed by means of a signal from the pick-up device 72 of acoustic emission situated on the dressing device so that no interruption of transmission of the signal should take place in the course of the shaping process. If an interruption of the signal occurs prior to finishing the shaping process, a new transformation of the trajectory of the shaping curve of the required profile of a grinding tool has to be made and a new shaping process with changed parameters with current checking of the level of the pick-up signal of acoustic emission from the pick up device 72 has to be performed from the start.

From the above it follows that the working need not proceed from the start according to a predetermined trajectory by a part program, but according to a newly determined trajectory which secures the maintenance of accurate conditions of the working process (for instance the same removal of material, the same pressure, and the like), of physical properties of the material, and simultaneously also of the final dimensions of the workpiece 2.

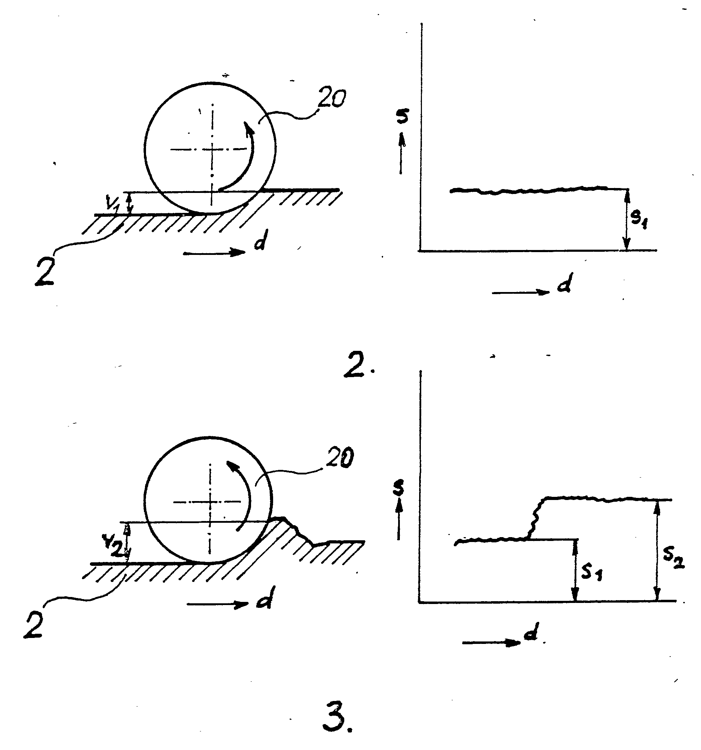

One of established and ascertained properties of the stochastic ultrasonic signal is the dependence of changes of characteristic features of the signal on the magnitude of the removed amount of material (of the surface layer) of the workpiece. The way in this property of the ultrasonic stochastic signal can be utilized in practice is indicated in Figures 2 and 3.

Figure 2 shows a working process, in which a grinding dsk 20 is supposed to remove from a workpiece 2 a layer $V_1$, the thickness of which is prescribed by stipulated technological conditions. In that case the output signal (level $S$, plotted

against distance d) from the respective pick-up device corresponds to a level $S_1$.

In the second case, according to Figure 3, a similar process is shown, where, however, owing to a boss, a projection, or the like, a layer $V_2$ of larger thickness has to be removed, so that originally stipulated technological conditions are not fulfilled. The stipulated technological conditions for control of the working process of the workpiece determine the removal of, for instance, solely a layer $V_1$ of material from the workpiece 2. As in this case it is necessary to apply the technological process as described in the first case, it is necessary to prepare new trajectories for the working tool 20. In the second case according to Figure 3 a higher value of the level of the signal $S_2$ corresponds to the change of thickness of the removed layer of material to $V_2$, the thickness of the removed layer $V_2$ is larger than the thickness of the removed layer $V_1$. Therefore also the signal level $S_2$ is higher than the signal level $S_1$. The computer system 12, on the basis of the magnitude of the signal level, prescribes new trajectories of the working tool 20 in such a manner that no larger removals of material from the workpiece than are required by the technological conditions are accomplished. The trajectories of the working tool are calculated so that the required dimensions of the workpiece 2 are obtained in the final phase of working.

The method and arrangement described above can be particularly utilized in machinery, above all for control of a machine tool of an industrial robot where an increased accuracy of working of curved surfaces, for instance of blades of rotary machines is required, of dies, bottom discs, forms for pressure casting and the like. The invention is of particular importance in finishing by grinding of irregular curved surfaces, particularly of objects made of hard metallic material and non-metallic material such as ceramic material, for polishing, lapping, and similar procedures.

## Claims

1. A method for adaptive control of the trajectory of a working process in order to maintain technological parameters of the working process, in the course of which working process an acoustic emission is generated due to contact of a working tool with a workpiece, the method being characterised in that
the dimensions of the working tool are determined by reading coordinates of a positioning device at the moment of contact of the working tool with a dimension standard whose coordinates are pre-established;
identification of the workpiece in the working space is accomplished, with determination of dimensions of the workpiece, on the basis of the identification of the workpiece in space and of a mathematical model, a starting optimum trajectory of the working process is calculated;
the working process is monitored by a control apparatus and on the basis of comparison of required with actual technological parameters, new trajectories of the working tool are established;
in the case of wear of the working tool the dimensions of the working tool are again determined, a correction of the working tool dimensions is introduced, and thus a new trajectory of the working tool is determined; and
if required, the above-mentioned operations are repeated in the course of the working process as often as necessary until the required result of the working process is obtained while maintaining the technological parameters.

2. An arrangement for execution of a method according to claim 1, comprising a fastening device (3) for fastening a workpiece (2), and a positioning device (1) for positioning a working tool (20) connected to a control system (14), characterised in that a dimension standard (6) is fixed on a base 4 on which the fastening device (3) is also fixed, to which dimension standard (6) a first pick-up device (71) of ultrasonic stochastic signals is connected, the output of which pick-up device (71) is connected to a first input of an analog evaluation unit (10), furthermore at least one further pick-up device (5) of ultrasonic stochastic signals is provided on the fastening device (3), the output(s) of which further pick-up device(s) (5) is/are connected to (a) further input(s) of the analog evaluation unit (10), and the output of the analog evaluation unit (10) is connected by way of an analog digital processor (11) with the input of a computer system (12), a first output of which is connected to the input of the said control system (14) and a second output of which is connected to a control input of the analog evaluation unit (10).

3. An arrangement as claimed in claim 2, in which a shaping and dressing device (8) for the working tool (20) is fixed on the base (4), enabling dressing of the working tool to a required shape.

4. An arrangement as claimed in claim 2 or 3, in which a transducer (9) is fixed on the base (4), the input of the transducer (9) being connected with the output of a generator (13) whose input is connected with a third output of the computer system (12), which is adapted to perform diagnosis and adjustment for adaptive control.

5. An arrangement as claimed in claim 2, 3, or 4, in which a superposed computer (15) with an implemented system of the CAD kind is connected to the computer system (12).

Fig. 1

2.

3.